(19) Europäisches Patentamt
European Patent Office
Office européen des brevets

(11) EP 3 708 867 A1

(12) **EUROPEAN PATENT APPLICATION**

(43) Date of publication:
**16.09.2020 Bulletin 2020/38**

(21) Application number: **20162223.0**

(22) Date of filing: **10.03.2020**

(51) Int Cl.:
**F16F 15/123** (2006.01)     **F16F 15/14** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.03.2019 JP 2019044163**

(71) Applicant: **AISIN SEIKI KABUSHIKI KAISHA Kariya-shi, Aichi-ken 448-8650 (JP)**

(72) Inventors:
• **SUZUKI, Ayano**
  **KARIYA-SHI, AICHI-KEN, 448-8650 (JP)**
• **JIMBO, Suguru**
  **KARIYA-SHI, AICHI-KEN, 448-8650 (JP)**
• **NASU, Tsuyoshi**
  **KARIYA-SHI, AICHI-KEN, 448-8650 (JP)**
• **MIYAMOTO, Yuki**
  **KARIYA-SHI, AICHI-KEN, 448-8650 (JP)**
• **YAMADA, Takashi**
  **KARIYA-SHI, AICHI-KEN, 448-8650 (JP)**
• **OI, Yoichi**
  **ANJO-SHI, AICHI-KEN, 444-1192 (JP)**
• **WAJIMA, Masaki**
  **ANJO-SHI, AICHI-KEN, 444-1192 (JP)**

(74) Representative: **Cabinet Beau de Loménie 158, rue de l'Université 75340 Paris Cedex 07 (FR)**

(54) **DAMPER DEVICE**

(57)     A damper device (1) includes: a rotating body (300, 301, 302) rotating on a first rotation axis (O), and having a first long hole (340); an oscillating body (550) having at least two first rolling holes (552), supported by first support portions (310); a mass body (501) having at least two second rolling holes (502) and a second long hole (504); at least two rolling elements extending in an axial direction, interposed between at least the first and second rolling holes, and at least a portion of which supports a first cam edge (552x) of the first rolling hole and a second cam edge (502x) of the second rolling hole; and a roller pin (520) having a small-diameter portion (522) and a large-diameter portion (521) rotating relative to the small-diameter portion with the small-diameter portion being inserted into an inside of the large-diameter portion.

*FIG.4*

EP 3 708 867 A1

**Description**

TECHNICAL FIELD

A technique disclosed in this disclosure relates to a damper device.

BACKGROUND DISCUSSION

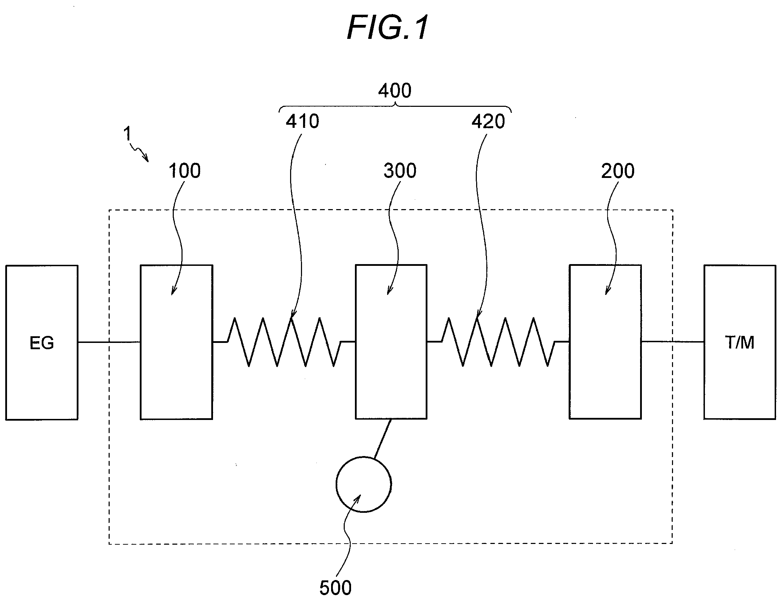

In a vehicle, a damper device which absorbs a vibration of a torque transmitted to a transmission from a drive source such as an engine is disposed on a torque transmission path between the drive source and the transmission. For example, the damper device is incorporated in a clutch device.
A general structure of the damper device is known as follows. For example, as illustrated in Fig. 1, a rotating body (for example, an intermediate plate) and a coil spring are interposed between an input member (for example, a disc plate) and an output member (for example, a hub) which are rotatable relative to each other. An elastic deformation of the coil spring is utilized to absorb and damp the vibration caused by a torque fluctuation by using a dynamic vibration absorber attached to the rotating body.
As a configuration of the specific damper device, JP 2017-53467A (Reference 1) discloses a configuration including an inertia ring that is rotatable relative to the rotating body, and a weight that is movable in a radial direction by using a centrifugal force generated by rotation of the rotating body. More specifically, the following technique is disclosed. When a rotational fluctuation occurs between the rotating body and the inertial ring due to contact between a roller disposed in the inertia ring and a cam-shaped curved surface disposed in the weight, the centrifugal force generated in the weight is converted into a circumferential force that reduces the rotational fluctuation.
In addition, US Patent No. 2,387,776 (Reference 2) discloses the damper device including a plate member (reference numeral 3 in Reference 2 and corresponding to the above-described rotating body), a roller (reference numeral 10 in Reference 2), a mass body (reference numeral 13 in Reference 2), and two discs (reference numeral 6 in Reference 2 and corresponding to the above-described inertia ring). In the disclosure, the roller rolls to guide a movement of the mass body.
However, in the damper device disclosed in Reference 1, a side surface of a weight (reference numeral 21 represented as a centrifuge in Reference 1) and a recessed portion 12a disposed in an output side rotating body (reference numeral 12 in Reference 1) are in surface contact with each other, thereby increasing sliding resistance. Consequently, there is a possibility that a smooth movement of the weight may be hindered.
Furthermore, Reference 1 discloses the following configurations. In view of the sliding resistance, a friction coefficient between the side surface of the weight and the recessed portion 12a is set to 0.1 or lower in one configuration. As an alternative way of the surface contact between the side surface of the weight and the recessed portion 12a, a roller (reference numeral 47 in Reference 1) is separately provided in another configuration. However, in the former configuration, in a case where a foreign matter enters between the side surface of the weight and the recessed portion 12a, a problem may occur in that the sliding resistance is likely to increase. In the latter configuration, initial rotation resistance of the roller itself increases (as the number of rollers increases, the resistance further increases). Consequently, the movement of the weight in a radial direction is likely to be hindered, and a damping function as the damper device is degraded.
In addition, the damper device disclosed in Reference 2 may have a problem in that the roller slips due to influence of the centrifugal force. Then, a sliding surface of the roller is likely to be worn. As a result, the damping function as the damper device is degraded.
Thus, a need exists for a damper device capable of improving damping performance to damp rotational fluctuations of a rotating body.

SUMMARY

A damper device according to an aspect of this disclosure includes a rotating body that rotates on a first rotation axis, and that has a first long hole extending in a radial direction of the first rotation axis, an oscillating body that has at least two first rolling holes, that is supported by a plurality of first support portions mounted on a side surface of the rotating body, that is rotatable relative to the rotating body, and that oscillates on the first rotation axis, a mass body that has at least two second rolling holes disposed to face the first rolling holes and a second long hole disposed to face the first long holes, at least two rolling elements that extend in an axial direction parallel to the first rotation axis, that are interposed between at least the first rolling hole and the second rolling hole, at least a portion of which supports a first cam edge of the first rolling hole and a second cam edge of the second rolling hole, and that roll along a shape of the first cam edge and the second cam edge, and a roller pin that has a small-diameter portion extending in the axial direction and having a first outer diameter, and a large-diameter portion having a second outer diameter larger than the first outer diameter, rotating relative to the small-diameter portion with the small-diameter portion being inserted into an inside of the large-diameter portion, and having a substantially annular cross-sectional shape, that is inserted into the first long hole and the second long hole, one of the small-diameter portion and the large-diameter portion of which is supported by the first long hole, and the other of the small-diameter portion and the large-diameter portion of which guides a movement of the mass body by rolling by itself while coming into contact with the mass body.

According to this configuration, the large-diameter portion and the small-diameter portion are disposed to be relatively rotatable. Therefore, it is possible to efficiently suppress slippage of the other one of the large-diameter portion and the small-diameter portion of the roller pin which comes into contact with the mass body. Therefore, the mass body can be smoothly moved. As a result, it is possible to improve a damping function as the damper device. In other words, according to the above-described configuration, it is possible to improve a function of the roller pin to guide the mass body (rotational function of the roller pin).

In the damper device according to the aspect, it is preferable that the large-diameter portion is a bearing into which the small-diameter portion is inserted, and is supported by the first long hole, and the small-diameter portion rolls by itself to guide the movement of the mass body in the radial direction.

According to this configuration, it is possible to reduce sliding resistance between the large-diameter portion and the small-diameter portion. Therefore, it is possible to improve a rotational function of the small-diameter portion which comes into contact with the mass body. Therefore, it is possible to further improve the damping function as the damper device.

In the damper device according to the aspect, it is preferable that at least one of the first long hole and the second long hole has a substantially trapezoidal shape.

According to this configuration, it is possible to more efficiently suppress the slippage of the other of the large-diameter portion and the small-diameter portion of the roller pin which comes into contact with the mass body. Therefore, the mass body can be more smoothly moved. As a result, it is possible to further improve the damping function as the damper device. In other words, according to the above-described configuration, it is possible to further improve the function of the roller pin to guide the mass body (rotational function of the roller pin).

In the damper device according to the aspect, it is preferable that the rotating body further has at least two first opening portions disposed to face the first rolling hole and the second rolling hole, and a pair of the rotating bodies is configured to interpose the oscillating body therebetween, the oscillating body further has a first through hole disposed to face the first long hole, and the mass bodies are configured to interpose the rotating body and the oscillating body therebetween.

According to this configuration, the oscillating body is disposed to be interposed between the pair of rotating bodies in the axial direction. Therefore, misalignment in the axial direction or inclination with respect to the first rotation axis is efficiently suppressed.

In the damper device according to the aspect, it is preferable that, in the radial direction, the roller pin is located between a first circumferential curve starting from a radially inner end portion of the rolling element as a start point and extending in a circumferential direction and a second circumferential curve starting from a radially outer end portion of the rolling element as a start point and extending in the circumferential direction.

According to this configuration, it is possible to reduce a rotational torque acting on the mass body. Therefore, it is possible to prevent the mass body from being inclined at a predetermined angle in the circumferential direction. As a result, it is possible to improve the damping function as the damper device.

In the damper device according to the aspect, it is preferable that, in a case where the rotating body and the oscillating body rotate without rotational fluctuation, and in a case where the oscillating body rotates relative to the rotating body, the small-diameter portion is always separated from a circumferential edge portion, extending in a circumferential direction, of the second long hole on an outer side and an inner side in the radial direction.

According to this configuration, the small-diameter portion can have a minimized contact area with the mass body. Therefore, it is possible to suppress the sliding resistance between the small-diameter portion and the mass body. Therefore, the mass body can be more smoothly moved. As a result, it is possible to improve the damping function as the damper device.

In the damper device according to the aspect, it is preferable that a pair of the mass bodies is disposed to interpose a pair of the rotating bodies and the oscillating body.

According to this configuration, while the oscillating body is interposed between the pair of rotating bodies, the oscillating body is interposed between the mass bodies. Therefore, the oscillating body is aligned in the axial direction. In this manner, the misalignment of the oscillating body in the axial direction or the inclination with respect to the first rotation axis is efficiently suppressed.

According to various embodiments, it is possible to provide a damper device capable of improving the damping performance of the rotational fluctuation of the rotating body.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a schematic view briefly illustrating a configuration of a damper device according to an embodiment disclosed here;

Fig. 2 is a schematic top view schematically illustrating a configuration of the damper device according to the embodiment;

Fig. 3 is a schematic sectional view schematically illustrating the configuration of the damper device illustrated in Fig. 2, which is taken along line A-A;

Fig. 4 is a schematic perspective view illustrating the configuration of the damper device according to the embodiment, in which each configuration element is illustrated in an exploded view;

Fig. 5 is a schematic perspective view illustrating a partial configuration of the damper device illustrated in Fig. 4, in which each configuration element is illustrated in an exploded view;

Fig. 6A is an enlarged view of a region I of the damper device illustrated in Fig. 2, and is a schematic top view in a case where a rotating body and an oscillating body rotate without rotational fluctuation;

Fig. 6B is an enlarged view of the region I of the damper device illustrated in Fig. 2, and is a schematic top view in a case where the oscillating body rotates relative to the rotating body;

Fig. 7A is an enlarged view of a first long hole, a second long hole, and a roller pin in the damper device illustrated in Figs. 6A and 6B, and is a schematic view illustrating a series of operations;

Fig. 7B is an enlarged view of the first long hole, the second long hole, and the roller pin in the damper device illustrated in Figs. 6A and 6B, and is a schematic view illustrating a series of operations;

Fig. 7C is an enlarged view of the first long hole, the second long hole, and the roller pin in the damper device illustrated in Figs. 6A and 6B, and is a schematic view illustrating a series of operations;

Fig. 7D is an enlarged view of the first long hole, the second long hole, and the roller pin in the damper device illustrated in Figs. 6A and 6B, and is a schematic view illustrating a series of operations;

Fig. 7E is an enlarged view of the first long hole, the second long hole, and the roller pin in the damper device illustrated in Figs. 6A and 6B, and is a schematic view illustrating a series of operations;

Fig. 7F is an enlarged view of the first long hole, the second long hole, and the roller pin in the damper device illustrated in Figs. 6A and 6B, and is a schematic view illustrating a series of operations;

Fig. 8 is a schematic view conceptually illustrating a torque acting on each contact point of a large-diameter portion and a small-diameter portion of the roller pin with respect to the first long hole and the second long hole in the schematic view illustrated in Fig. 7D; and

Fig. 9 is an enlarged schematic view illustrating a first long hole, a second long hole, and a roller pin in a damper device according to another embodiment.

DETAILED DESCRIPTION

Hereinafter, various embodiments disclosed here will be described with reference to the accompanying drawings. The same reference numerals will be given to configuration elements common to each other in the drawings. It should be noted that the configuration elements expressed in a certain drawing may be omitted in another drawing for convenience of description. Furthermore, it should be noted that the accompanying drawings are not necessarily illustrated by using exact scales.

Configuration of Damper Device

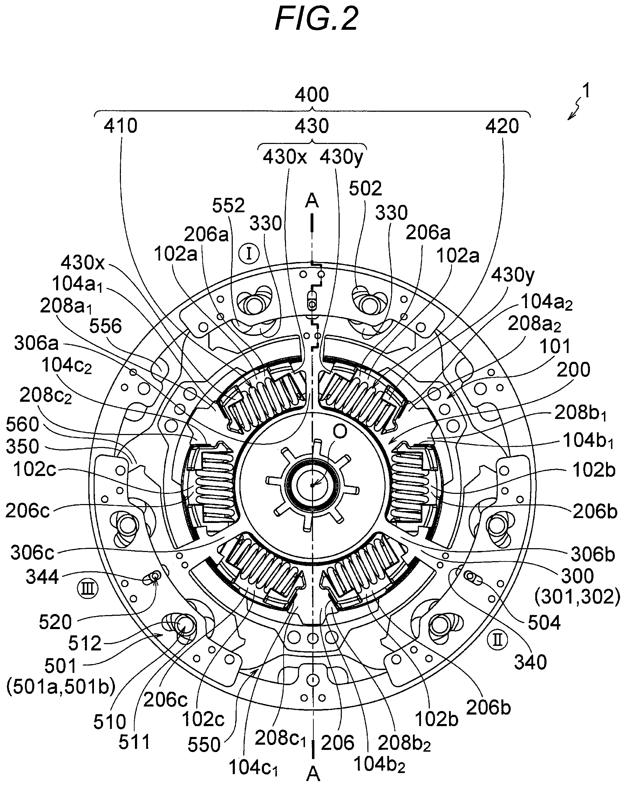

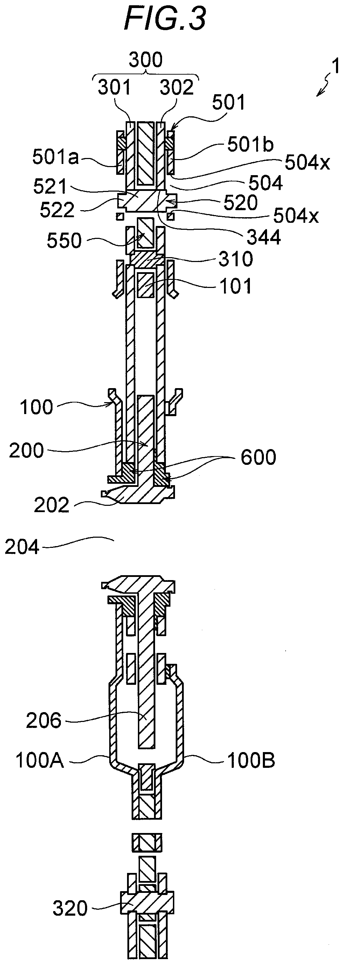

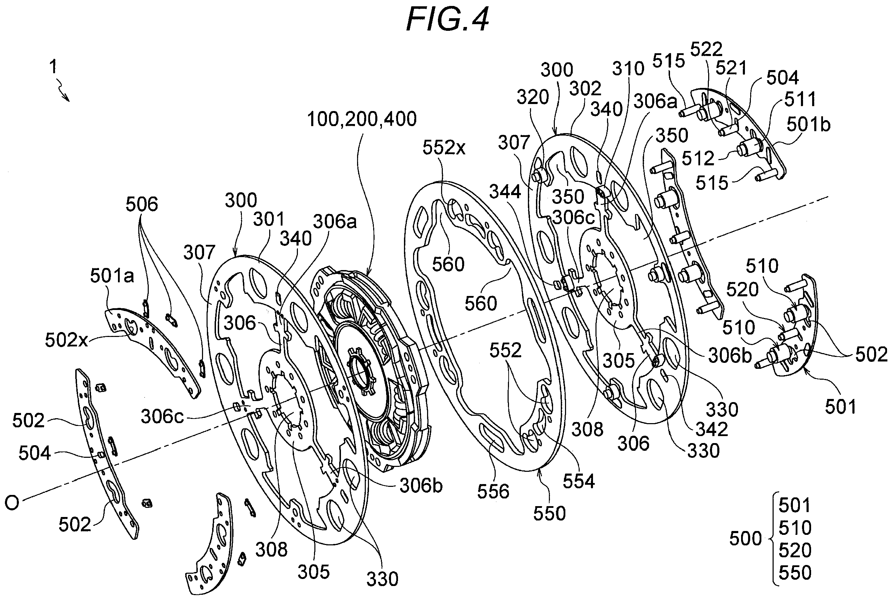

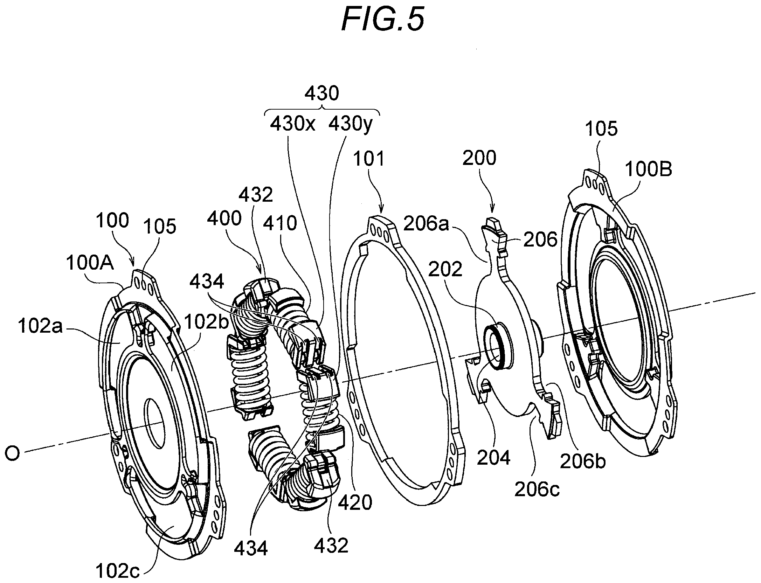

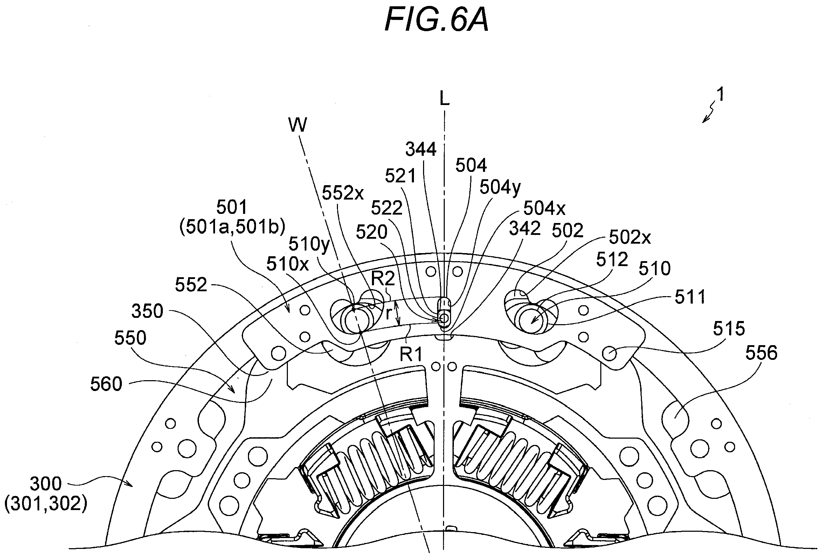

An outline of an overall configuration of a damper device according to an embodiment disclosed here will be described with reference to Figs. 1 to 6A. Fig. 1 is a schematic view briefly illustrating a configuration of a damper device 1 according to the embodiment. Fig. 2 is a schematic top view schematically illustrating the configuration of the damper device 1 according to the embodiment. Fig. 3 is a schematic sectional view schematically illustrating the configuration of the damper device 1 illustrated in Fig. 2, which is taken along line A-A. Fig. 4 is a schematic perspective view illustrating the configuration of the damper device 1 according to the embodiment, in which each configuration element is illustrated in an exploded view. Fig. 5 is a schematic perspective view illustrating the configuration of the damper device 1 illustrated in Fig. 4, in which each configuration element is illustrated in an exploded view. Fig. 6A is an enlarged view of a region I in the damper device 1 illustrated in Fig. 2, and is a schematic top view in a case where a rotating body (intermediate plate 300) and an oscillating body 550 rotate without rotational fluctuation.

The damper device 1 according to the embodiment transmits a drive force to a transmission from a drive source such as an engine and a motor by being interposed between a flywheel (not illustrated) and a pressure plate (not illustrated), for example. A structure for interposing the damper device 1 between the flywheel and the pressure plate is well known. Accordingly, detailed description thereof will be omitted.

The damper device 1 absorbs and damps a torque fluctuation. As illustrated in Fig. 1, a basic configuration of the damper device 1 mainly includes a disc plate 100 serving as an input member to which a torque is input, a hub 200 serving as an output member, an intermediate plate 300 serving as a rotating body disposed between the disc plate 100 and the hub 200, an elastic mechanism 400 including a first elastic body 410 and a second elastic body 420, and a dynamic vibration absorber 500. In Fig. 4, for convenience of description, the disc plate 100 (including a spacer 101 to be described later), the hub 200, and the elastic mechanism 400 are integrally illustrated. It should be noted that arrangement sequences of respective members differ in an axial direction of a first rotation axis O (hereinafter, referred to as an axial direction). Fig. 3 may be a reference for the arrangement sequences of the respective members in the axial direction.

1-1. Hub 200

For example, the hub 200 is formed of a metal material, has a substantially annularly extending shape as a whole, and is disposed to be rotatable around the first rotation axis O. As illustrated in Figs. 3 and 5, the hub 200 can be joined in a spline joining method by inserting an input shaft (not illustrated) of a transmission into a through hole 204 formed in a cylindrical portion 202 having a substantially cylindrical shape. The hub 200 has a flange 206 having a substantially annular shape extending from the cylindrical portion 202 in a radial direction. The hub 200 can adopt a configuration in which the cylindrical portion 202 and the flange 206 are integrated with each other, and a configuration in which the cylindrical portion 202 and the flange 206 are separated from each other and a micro spring is installed between both of these.

An outer periphery of the flange 206 has at least one notch formed along a circumferential direction. According to the embodiment, as an example, as illustrated in Figs. 2 and 5, the outer periphery of the flange 206 has three notches 206a, 206b, and 206c formed at an equal interval along the circumferential direction (interval of 120 degrees in the circumferential direction). As illustrated in Fig. 2, in a top view of the damper device 1, when the damper device 1 is conceptually divided into three regions I, II, and III each having a fan shape, the flange 206 has the first notch 206a, the second notch 206b, and the third notch 206c which are respectively associated with the regions I to III. The number of the notches is not limited to three. The notches are disposed corresponding to a configuration of the elastic mechanism 400 (to be described later), more specifically, the number of elastic units including the first elastic body 410 and the second elastic body 420 as one set.

The first notch 206a, the second notch 206b, and the third notch 206c can accommodate the elastic mechanism 400 (to be described later) by forming the notches in this way. Corresponding to the region I, the flange 206 has an engagement portion (first engagement portion on one end side) $208a_1$ on one end side and an engagement portion (first engagement portion on the other end side) $208a_2$ on the other end side facing the one end side. Corresponding to the region II, the flange 206 has an engagement portion (second engagement portion on one end side) $208b_1$ on one end side and an engagement portion (second engagement portion on the other end side) $208b_2$ on the other end side facing the one end side. Corresponding to the region III, the flange 206 has an engagement portion (third engagement portion on one end side) $208c_1$ on one end side and an engagement portion (third engagement portion on the other end side) $208c_2$ on the other end side facing the one end side.

The engagement portions $208a_1$, $208b_1$, and $208c_1$ on each one end side can have the same configuration, and the engagement portions $208a_2$, $208b_2$, and $208c_2$ on each other end side can have the same configuration. The engagement portions $208a_1$, $208b_1$, and $208c_1$ on each one end side can have a configuration symmetrical with that of the engagement portions $208a_2$, $208b_2$, and $208c_2$ on each other end side. The engagement portions $208a_1$, $208b_1$, and $208c_1$ on each one end side and the engagement portions $208a_2$, $208b_2$, and $208c_2$ on the other end side respectively engage with a sheet member 430 of an elastic mechanism (to be described later). In this manner, a torque input to the disc plate 100 serving as an input member is transmitted via the intermediate plate 300 and the elastic mechanism 400 so as to be rotatable.

1-2. Disc Plate 100

The disc plate 100 on the input side in a torque transmission path is formed of a metal material, for example. As illustrated in Figs. 3 to 5, the disc plate 100 is disposed to interpose the hub 200 and the intermediate plate 300 (to be described later) to be coaxially and relatively rotatable around the hub 200 and the first rotation axis O. The disc plate 100 includes a first disc plate 100A and a second disc plate 100B which serve as a pair of plate members disposed on both sides of the hub 200 and the intermediate plate 300 (to be described later) in the axial direction. The first disc plate 100A and the second disc plate 100B have a symmetrical shape in the axial direction. A spacer 101 which can properly adjust both positions in the axial direction is interposed therebetween, and both of these are joined to each other by using a plurality of rivets R (not illustrated) via a through hole 105 in the vicinity of both outer peripheries.

In cooperation with each other, and corresponding to each of the regions I to III, the first disc plate 100A and the second disc plate 100B have a shape that swells in the axial direction of the disk plate 100 so as to form accommodation regions (three accommodation regions in an example illustrated in Fig. 2) for accommodating the elastic mechanism 400. Each accommodation region extends in a substantially linear shape or in a substantially arc shape along the circumferential direction of the disc plate 100 in order to accommodate the first elastic body 410 and the second elastic body 420 which extend along the circumferential direction of the disc plate 100.

Specifically, referring to Figs. 2 and 5, corresponding to the regions I to III, the first disc plate 100A and the second disc plate 100B form the first accommodation region 102a, the second accommodation region 102b, and the third accommodation region 102c which respectively extend along the circumferential direction. The first accommodation region 102a is formed to correspond to the first notch 206a, the second accommodation region 102b is formed to correspond to the second notch 206b, and the third accommodation region 102c is formed to correspond to the third notch 206c. (The number of the accommodation regions also corresponds to the number of the notches disposed in the hub 200).

Focusing on the region I, as illustrated in Fig. 2, the first disc plate 100A and the second disc plate 100B include one end surface (first one end surface) $104a_1$ and the other end surface (first other end surface) $104a_2$ facing the one end surface, as a side wall that surrounds the first accommodation region 102a. As an example, the first one end surface $104a_1$ and the first other end surface $104a_2$ extend along the axial direction of the disc plate 100.

Similarly, focusing on the region II, the first disc plate 100A and the second disc plate 100B include one end surface (second one end surface) $104b_1$ and the other end surface (second other end surface) $104b_2$ facing the one end surface, as a side wall that surrounds the second accommodation region 102b. Focusing on the region III, the first disc plate 100A and the second disc plate 100B include one end surface (third one end surface) $104c_1$ and the other end surface (third other end surface) $104c_2$ facing the one end surface, as a side wall that surrounds the third accommodation region 102c.

However, a gap G (not illustrated) for receiving the engagement portion $208a_1$ on the first one end side is formed between the first one end surface $104a_1$ formed by the first disc plate 100A and the first one end surface $104a_1$ formed by the second disc plate 100B so that the engagement portion $208a_1$ on the first one end side of the flange 206 in the hub 200 can enter the inside of the first accommodation region 102a. In addition, the gap G (not illustrated) for receiving the engagement portion $208a_2$ on the first other end side is similarly formed between the first other end surface $104a_2$ formed by the first disc plate 100A and the first other end surface $104a_2$ formed by the second disc plate 100B so that the engagement portion $208a_2$ on the first other end side can enter the inside of the first accommodation region 102a. These structures are similarly formed in the regions II and III.

1-3. Intermediate Plate 300

The intermediate plate 300 serving as the rotating body is annularly formed of a metal material, for example. As illustrated in Figs. 2 to 4, the intermediate plate 300 is disposed to interpose the hub 200 in the axial direction so as to be coaxial with the disc plate 100 and the hub 200 and relatively rotatable around the first rotation axis O with respect to both of these. The intermediate plate 300 includes a first intermediate plate 301 and a second intermediate plate 302 as a pair of plate members disposed on both sides of the hub 200 in the axial direction (any one configuration may be adopted). The first intermediate plate 301 and the second intermediate plate 302 have the same shape, and are fixed to each other by fixing means such as a fastening member 320 so that both of these are rotatable integrally with each other.

As illustrated in Fig. 4, the first intermediate plate 301 and the second intermediate plate 302 respectively have a disc-shaped inner circle portion 305, an annular outer ring portion 307, and a connecting portion 306 that connects the inner circle portion 305 and the outer ring portion 307 to each other.

As illustrated in Fig. 3, the inner circle portion 305 has an insertion hole 308 into which a stepped bush 600 attached to an outer peripheral side of the cylindrical portion 202 of the hub 200 can be inserted. In this manner, the first intermediate plate 301 and the second intermediate plate 302 are axially supported by the hub 200 via the bush 600 by connecting the inner circle portion 305 to the bush 600. Accordingly, the first intermediate plate 301 and the second intermediate plate 302 are reliably aligned in the axial direction and the radial direction of the first rotation axis O (hereinafter, referred to as the radial direction). In this manner, misalignment or inclination of the first intermediate plate 301 and the second intermediate plate 302 is suppressed in the axial direction and the radial direction. Accordingly, stability is improved as the damper device 1 (torque transmission loss can be suppressed).

As illustrated in Figs. 2 and 4, the connecting portion 306 extends outward in the radial direction from an outer peripheral end of the inner circle portion 305, and connects the inner circle portion 305 and the outer ring portion 307 to each other. Corresponding to the regions I to III, the connecting portion 306 has a first connecting portion 306a corresponding to the first accommodation region 102a disposed in the first notch 206a and the disc plate 100 which are disposed in the hub 200, a second connecting portion 306b corresponding to the second accommodation region 102b disposed in the second notch 206b and the disc plate 100 which are disposed in the hub 200, and a third connecting portion 306c corresponding to the third accommodation region 102c disposed in the third notch 206c and the disc plate 100 which are disposed in the hub 200.

The first connecting portion 306a is accommodated between the first elastic body 410 and the second elastic body 420 in the elastic mechanism 400, and engages with each of a sheet member 430x that supports the first elastic body 410 and a sheet member 430y that supports the second elastic body 420. The second connecting portion 306b and the third connecting portion 306c also engage with the sheet member 430x and the sheet member 430y, as in the first connecting portion 306a. An engagement structure between the first connecting portion 306a (and the second connecting portion 306b and the third connecting portion 306c) and the sheet member 430x and the sheet member 430y will be described in detail later.

The outer ring portion 307 forms an outer diameter of the intermediate plate 300, and is disposed to support the dynamic vibration absorber 500 (to be described later). Specifically, a plurality of (three in Fig. 4) first support portions 310 that support the oscillating body 550 functioning as the dynamic vibration absorber 500 (to be described later) are attached to a side surface of the outer ring portion 307. Furthermore, corresponding to the regions I to III, the outer ring portion 307 has two first opening portions 330 in each region and one first long hole 340 extending in the radial direction.

The first opening portion 330 is disposed so that a rolling element 510 in the dynamic vibration absorber 500 (to be described later) penetrates in the axial direction and the rolling element 510 is interposed between a first rolling hole 552 disposed in the oscillating body 550 (to be described later) and a second rolling hole 502 disposed in a mass body 501 (to be described later). The first long hole 340 is disposed so that a roller pin 520 in the dynamic vibration absorber 500 (to be described later) is inserted into the first long hole 340 in the axial direction. The first opening portion 330 is set to be larger than the first rolling holes 552 and the second rolling holes 502. Therefore, the first opening portion 330 simply penetrates the rolling element 510 without supporting the rolling element 510.

Here, in a case where the damper device 1 according to the embodiment has a different configuration, in the intermediate plate 300 (a case is assumed where only one of the first intermediate plate 301 and the second intermediate plate 302 is used), a configuration of omitting the first opening portion 330 may be adopted. Specifically, as a configuration of the damper device 1 which is different from that of the embodiment (configuration in which the mass body 501, the intermediate plate 300, and the oscillating body 550 are aligned in this order in the axial direction), for example, in a case where the oscillating body 550, the mass body 501, and the intermediate plate 300 are aligned in this order in the axial direction (case where the oscillating body 550 and the mass body 501 are arranged adjacent to each other in the axial direction), the rolling element 510 can be interposed between the first rolling hole 552 and the second rolling hole 502 without disposing the first opening portion 330 in the intermediate plate 300. In this configuration, the first opening portion 330 is not disposed in the intermediate plate 300. Therefore, the rigidity of the intermediate plate 300 can be improved, and the damping performance of the damper device 1 can be stabilized.

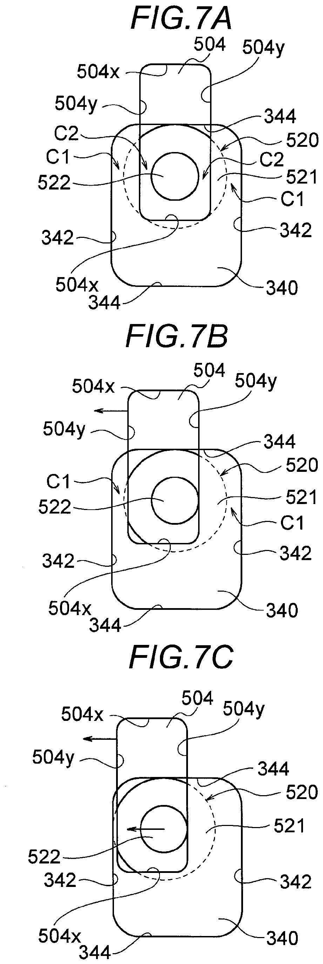

The first long hole 340 is disposed to face the second long hole 504 disposed in the mass body 501 (to be described later) in the axial direction. As will be described later, in a case where the first through hole 554 is disposed in the oscillating body 550, the first long hole 340 also faces the first through hole 554 in the axial direction as illustrated in Fig. 4. The inner diameter extending in the circumferential direction of the first rotation axis O (hereinafter, referred to as the circumferential direction) in the first long hole 340 is set to be approximately 1 mm larger than the outer diameter of the large-diameter portion 521 in the roller pin 520 (to be described later). While the roller pin 520 is inserted into the first long hole 340, the roller pin can be supported by one first edge portion 342 (refer to Figs. 7A to 7F) extending in the radial direction in the first long hole 340 (first edge portion 342 defines the first long hole 340. The first long hole 340 has two first edge portions 342. The same applies to the second long hole 504 to be described later, and the second long hole 504 has two fourth edge portions 504y). Two second edge portions 344 on the outer diameter side extending in the circumferential direction of the first long hole 340 (second edge portions 344 are present on the inner diameter side and the outer diameter side in the first long hole 340, for the same reason as the first edge portion 342. The same applies to the second long hole 504 to be described later. Two third edge portions 504x are present on the inner diameter side and the outer diameter side in the second long hole 504) can come into contact with and support the large-diameter portion 521 of the roller pin 520 in the radial direction (refer to Figs. 2, 3, and 6A).

In the description herein, for convenience, the circumferential direction includes a linear direction substantially parallel to the circumferential direction, in addition to the circumferential direction of the first rotation axis O, as described above. Specifically, for example, in Fig. 6A, the inner diameter of the second long hole 504 extending in a rightward-leftward direction in the drawing is also referred to as the inner diameter of the second long hole 504 extending in the circumferential direction.

Furthermore, as illustrated in Figs. 2 and 4, the outer ring portion 307 has a first fastening notch 350 for inserting a fastening pin 515 for pairing (integrating) the two mass bodies 501 in the axial direction.

1-4. Elastic Mechanism 400

The elastic mechanism 400 is configured to mainly include a first elastic body 410 using a coil spring, a second elastic body 420 similarly using the coil spring, and sheet members 430 (sheet member 430x and sheet member 430y) that support the first elastic body 410 or the second elastic body 420. As illustrated in Figs. 2 and 5, the first elastic body 410 and the second elastic body 420 are aligned one by one in series in the circumferential direction, thereby forming a set of elastic units. In the embodiment illustrated in Figs. 2 and 5, a case is assumed where a positive torque is transmitted clockwise from a drive source such as an engine and a motor. The first elastic body 410 and the second elastic body 420 are disposed in each elastic unit in the order (order in which the second elastic body 420 is disposed next to the right rotation of the first elastic body 410). In a case where the positive torque is transmitted counterclockwise, the first elastic body 410 and the second elastic body 420 are disposed in each elastic unit in the order in which the second elastic body 420 is disposed next to the left rotation of the first elastic body 410.

In the embodiment illustrated in Figs. 2 and 6A, as an example, the disc plate 100 has the three accommodation regions, that is, the first accommodation region 102a to the third accommodation region 102c (the hub 200 has the three notches, that is, the first notch 206a to the third notch 206c). Accordingly, one elastic unit (one first elastic body 410 and one second elastic body 420) is accommodated in each of the three accommodation regions, that is, corresponding to the respective regions I to III. In the respective regions I to III, both ends of the first elastic body 410 are supported by the pair of sheet members 430x, and both ends of the second elastic body 420 are supported by the pair of sheet members 430y. In this manner, the elastic mechanism 400 is disposed in an annular shape as a whole by the three elastic units and the sheet member 430.

Here, focusing on the region I, as illustrated in Fig. 2, one of the sheet members 430x that support the first elastic body 410 engages with each of the first one end surface $104a_1$ disposed in the disc plate 100 and the engagement portion $208a_1$ on the first one end side disposed in the hub 200. The other of the sheet members 430x that support the first elastic body 410 engages with the first connecting portion 306a in the intermediate plate 300.

As illustrated in Fig. 5, one of the sheet members 430x has a first groove portion 432, and the engagement portion $208a_1$ on the first one end side disposed in the hub 200 is accommodated in the first groove portion 432, thereby enabling one of the sheet members 430x and the hub 200 to engage with each other. The other of the sheet members 430x has a second groove portion 434, and the first connecting portion 306a in the intermediate plate 300 is accommodated in the second groove portion 434, thereby enabling the other of the sheet members 430x and the Intermediate plate 300 to engage with each other.

Furthermore, one of the sheet members 430y that support the second elastic body 420 engages with the first connecting portion 306a in the intermediate plate 300, and the other of the sheet members 430y that support the second elastic body 420 engages with each of the first other end surface $104a_2$ disposed in the disc plate 100 and the engagement portion $208a_2$ on the first other end side disposed in the hub 200.

As illustrated in Fig. 5, one end of the sheet member 430y also has the second groove portion 434, and the first connecting portion 306a in the intermediate plate 300 is accommodated in the second groove portion 434, thereby enabling one end of the sheet member 430y and the intermediate plate 300 to engage with each other. The other of the sheet members 430y has the first groove portion 432, and the engagement portion $208a_2$ on the first other end side disposed in the hub 200 is accommodated in the first groove portion 432, thereby enabling the other of the sheet members 430y and the hub 200 to engage with each other. The regions II and III have the same configuration.

Each of the elastic units having the above-described configuration accommodates the intermediate plate 300 (the first connecting portion 306a to the third connecting portion 306c) between the first elastic body 410 and the second elastic body 420. More precisely, the intermediate plate 300 is accommodated between the sheet member 430x and the sheet member 430y.

According to the above-described configuration, the first elastic body 410 can elastically couple the disc plate 100 and the intermediate plate 300 with each other in the rotation direction (clockwise rotation direction) via the sheet member 430x, and the second elastic body 420 can elastically couple the intermediate plate 300 and the hub 200 with each other via the sheet member 430y. That is, the torque output from the drive source such as the engine and the motor is transmitted to the disc plate 100, the sheet member 430x on one side, the first elastic body 410, the sheet member 430x on the other side, the intermediate plate 300, the sheet member 430y on one side, the second elastic body 420, the sheet member 430y on the other side, and the hub 200 in this order.

1-5. Dynamic Vibration Absorber 500

As illustrated in Figs. 2 to 4 and 6A, the dynamic vibration absorber 500 can adopt those which substantially include the oscillating body 550 and the pair of mass bodies 501 (first mass body 501a and second mass body 501b) serving as weights, the rolling element 510 serving as an inertia ring that rolls by being interposed between the first rolling hole 552 disposed in the oscillating body 550 and the second rolling hole 502 disposed in the mass body 501,

and the roller pin 520 serving as a rotating body inserted into the first long hole 340 disposed in the intermediate plate 300 and the second long hole 504 disposed in the mass body 501. Hereinafter, each element will be described in detail.

1-5-1. Oscillating Body 550

For example, the oscillating body 550 is formed of a metal material in an annular shape, and can adopt the configuration according to the embodiment in which the oscillating body 550 is interposed between the first intermediate plate 301 and the second intermediate plate 302 in the axial direction as illustrated in Figs. 2 to 4. The oscillating body 550 is rotatable relative to the intermediate plate 300 (first intermediate plate 301 and second intermediate plate 302) on the first rotation axis O, and oscillates with respect to the intermediate plate 300 in the circumferential direction. The oscillating body 550 is disposed to be interposed between the pair of intermediate plates 300 (first intermediate plate 301 and second intermediate plate 302) in the axial direction. Therefore, the oscillating body 550 is reliably aligned in the axial direction. The misalignment in the axial direction or the inclination with respect to the first rotation axis O is efficiently suppressed. The outer diameter of the oscillating body 550 is designed to be substantially the same as the outer diameter of the intermediate plate 300.

As illustrated in Figs. 3 and 4, the oscillating body 550 is supported by the plurality of first support portions 310 mounted on the side surface of the outer ring portion 307 of the intermediate plate 300. The first support portions 310 are disposed in a boundary portion between the connecting portion 306 and the outer ring portion 307 in the intermediate plate 300 corresponding to the regions I to III, and the plurality of first support portions 310 are respectively disposed at an equal interval. Therefore, the oscillating body 550 is rotatable coaxially with the intermediate plate 300 without being axially misaligned with the intermediate plate 300. The oscillating body 550 is mounted on the first support portion 310. Therefore, the oscillating body 550 is disposed in the radial direction away from the disc plate 100 (strictly, the spacer 101) serving as an input member via the first support portion 310. In this manner, the oscillating body 550 is not affected by the rotation of the disc plate 100 (spacer 101). Therefore, the oscillating body 550 is efficiently and relatively rotatable with the intermediate plate 300.

Furthermore, in the embodiment, as illustrated in Fig. 4, the oscillating body 550 has two first rolling holes 552 and one first through hole 554 in each region corresponding to the regions I to III.

The first rolling hole 552 is disposed at a position facing the second rolling hole 502 disposed in the mass body 501 in the axial direction. As described above, in a case where the first opening portion 330 is disposed in the intermediate plate 300 as a configuration of the embodiment, the first rolling hole 552 also faces the first opening portion 330 in the axial direction. The first rolling hole 552 forms a substantially arc-shaped first cam edge 552x that guides the rolling of the rolling element 510 by coming into contact with a first outer diameter portion 511 of the rolling element 510 (to be described later). A shape of the first cam edge 552x is designed corresponding to a shape of a second cam edge 502x of the second rolling hole 502 (to be described later). For example, as will be described later, in a case where the shape of the second cam edge 502x adopts a shape extending in a curved shape swelling toward the first rotation axis O (for example, in Fig. 6A, a shape substantially projecting in a downward direction in the drawing), correspondingly, as the shape of the first cam edge 552x, it is possible to adopt a shape extending in a curved shape swelling outward in the radial direction of the first rotation axis O (for example, in Fig. 6A, a shape substantially projecting in an upward direction in the drawing).

The first through hole 554 is disposed at a position facing the first long hole 340 disposed in the intermediate plate 300 (and the second long hole 504 disposed in the mass body 501) in the axial direction. The first through hole 554 is disposed to axially insert the roller pin 520 into the first long hole 340 and the second long hole 504 which are aligned in the axial direction. Therefore, in a case where the damper device 1 according to the embodiment has a different configuration, the oscillating body 550 may have a configuration of omitting the first through hole 554. Specifically, as a configuration of the damper device 1 that is different from that according to the embodiment (configuration in which the mass body 501, the intermediate plate 300, and the oscillating body 550 are aligned in this order in the axial direction), for example, in a case where the oscillating body 550, the mass body 501, and the intermediate plate 300 are aligned in this order in the axial direction (case where the mass body 501 and the intermediate plate 300 are disposed adjacent to each other in the axial direction), the roller pin 520 can be inserted into the first long hole 340 and the second long hole 504 without disposing the first through hole 554 in the oscillating body 550. In this configuration, the first through hole 554 is not disposed in the oscillating body 550. Therefore, the rigidity of the oscillating body 550 can be improved, and the damping performance of the damper device 1 can be improved.

Furthermore, as illustrated in Figs. 2 and 4, the oscillating body 550 has a second through hole 556 for allowing a fastening member 320 which fixes the first intermediate plate 301 and the second intermediate plate 302 to each other to penetrate in the axial direction. The second through hole 556 is disposed at a position facing the fastening member 320 in the axial direction. However, as described above, in a case where the intermediate plate 300 adopts only one of the first intermediate plate 301 and the second intermediate plate 302, it is not necessary to dispose the second through hole 556 in the oscillating body 550.

Furthermore, as illustrated in Figs. 2 and 4, the oscillating body 550 has a second fastening notch 560 for allowing a fastening pin 515 for pairing (integrating) the two mass bodies 501 to penetrate in the axial direction. However, as will be described later, in a case of adopting a configuration in which the two mass bodies 501 are not paired, it is not necessary to dispose the second fastening notch 560 in the oscillating body 550.

As another embodiment, for example, the oscillating body 550 may be configured to include a pair of two oscillating bodies 550 so that the intermediate plate 300 and/or the mass body 501 are interposed therebetween.

1-5-2. Mass body 501

As illustrated in Figs. 2 to 4 and 6A, in the mass body 501 according to the embodiment, corresponding to the regions I to III, the plate-shaped first mass body 501a and the plate-shaped second mass body 501b are paired in each region. Both of these are disposed to interpose both the intermediate plate 300 (first intermediate plate 301 and second intermediate plate 302) and the oscillating body 550 on the side surface of the intermediate plate 300 (strictly, the outer ring portion 307 of the intermediate plate) via a plurality of resin spacers 506. Therefore, in the damper device 1 according to the embodiment, three sets of the pair of mass bodies 501 are provided.

Furthermore, as illustrated in Figs. 2, 4, and 6A, the first mass body 501a (second mass body 501b) has two second rolling holes 502 and one second long hole. 504.

The second rolling hole 502 is disposed at a position facing the first rolling hole 552 disposed in the oscillating body 550 in the axial direction. As described above, in a case where the first opening portion 330 is disposed in the intermediate plate 300 as a configuration according to the embodiment, the second rolling hole 502 also faces the first opening portion 330 in the axial direction. The second rolling hole 502 forms a substantially arc-shaped second cam edge 502x that comes into contact with a second outer diameter portion 512 of the rolling element 510 (to be described later) and guides the rolling of the rolling element 510. As a shape of the second cam edge 502x, it is possible to adopt a shape capable of accommodating the rolling element 510 (precisely, the second outer diameter portion 512 of the rolling element) and extending in a curved shape (most preferably, an arc shape or a substantially arc shape) swelling toward the first rotation axis O (for example, in Fig. 6A, a shape substantially projecting in the downward direction in the drawing).

The two second rolling holes 502 disposed in the first mass body 501a (second mass body 501b) are disposed mirror-symmetrically with respect to the center of the first mass body 501a in the circumferential direction.

As illustrated in Figs. 2, 4, and 6A, the second long hole 504 is disposed at a position facing the first long hole 340 disposed in the intermediate plate 300 in the axial direction. As described above, in a case where the first through hole 554 is disposed in the oscillating body 550 as a configuration according to the embodiment, the second long hole 504 also faces the first through hole 554 in the axial direction. The inner diameter of the second long hole 504 extending in the circumferential direction is set to be approximately 1 mm larger than the outer diameter of the small-diameter portion 522 of the roller pin 520, and is set to be smaller than the inner diameter of the first long hole 340 extending in the circumferential direction. That is, the second long hole 504 is defined by third edge portions 504x extending in the circumferential direction and fourth edge portions 504y extending in the radial direction in the first mass body 501a. Any one of the fourth edge portions 504y (in Fig. 6A, the fourth edge portion 504y on the right side in the drawing or the fourth edge portion 504y on the left side in the drawing) is disposed to be capable of coming into contact with the small-diameter portion 522 of the roller pin 520.

The second long hole 504 is configured as described above. In this manner, the second long hole 504 prevents the roller pin 520 from falling off in the axial direction, and minimizes the contact point between the fourth edge portion 504y of the second long hole 504 and the small-diameter portion 522 of the roller pin 520. In this manner, the sliding resistance is minimized between the second long hole 504 (first mass body 501a or second mass body 501b) and the small-diameter portion 522 of the roller pin 520. Accordingly, the small-diameter portion 522 does not slip, thereby enabling smooth rolling. In principle (except for a case where the intermediate plate 300 and the oscillating body 550 do not rotate on the first rotation axis O), the third edge portion 504x of the second long hole 504 is designed not to come into contact with (to be separated from) the small-diameter portion 522 of the roller pin 520 on both the outer side and the inner side in the radial direction. That is, the inner diameter of the second long hole 504 in the radial direction is designed to be sufficiently large to such an extent that the third edge portion 504x does not come into contact with the small-diameter portion 522.

More specifically, the second long hole 504 is disposed at the center of the first mass body 501a (second mass body 501b) in the circumferential direction. In other words, the second long hole 504 is disposed at the symmetry center of the two second rolling holes 502 disposed in mirror symmetry. The inner diameter of the second long hole 504 extending in the radial direction is set to be larger than a radial distance r between a first circumferential curve R1 and a second circumferential curve R2 (to be described later). In this manner, in principle, the third edge portion 504x in the second long hole 504 does not come into contact with the small-diameter portion 522 of the roller pin 520.

The second long hole 504 adopts the above-described configuration. Accordingly, the movement of the mass body 501 (first mass body 501a or second mass body 501b) in the circumferential direction is restricted by the roller pin 520 (small-diameter portion 522). In contrast (as will be described later, except for a slight distance movement in the circumferential direction in order to fill a clearance C1 between the first edge portion 342 of the first long hole 340 and the large-diameter portion 521 of the roller pin 520 and a clearance C2 between the fourth edge portion 504y of the second long hole 504 and the small-diameter portion 522 of the roller pin 520), the fourth edge portion 504y comes into contact with the small-diameter portion 522 of the roller pin 520, and is guided by the rolling of the small-diameter portion 522, thereby enabling the fourth edge portion 504y to oscillate only in the radial direction.

The two mass bodies 501 (first mass body 501a and second mass body 501b) are paired (integrated) by the fastening pin 515. It is preferable that the fastening pin 515 is disposed in the vicinity of the circumferential end portion and the radial end portion of the mass body 501. As described above, the oscillating body 550 has the second fastening notch 560 in order to insert the fastening pin 515 in the axial direction. However, from a viewpoint of efficiently improving the damping function (oscillation on the first rotation axis O) of the oscillating body 550, it is not preferable that the second fastening notch 560 is present to the vicinity of the radially outer side in the oscillating body 550. Therefore, the fastening pin 515 is located at the above-described position. In this manner, the second fastening notch 560 can be reduced to a necessary minimum size.

Incidentally, as another embodiment, the mass body 501 may be configured as follows. Corresponding to the regions I to III, only the plate-shaped first mass body 501a (or only the second mass body 501b) in each area is disposed on one side surface of the intermediate plate 300.

1-5-3. Rolling Element 510

As illustrated in Figs. 2, 4, and 6A, the rolling element 510 extends in the axial direction after penetrating the first opening portion 330 disposed in the intermediate plate 300 (first intermediate plate 301 and second intermediate plate 302) (as described above, only in a case where the first opening portion 330 is disposed in the intermediate plate 300). The rolling element 510 is interposed between the first rolling hole 552 disposed in the oscillating body 550 and the second rolling holes 502 disposed in the mass body 501 (first mass body 501a and second mass body 501b). The rolling element 510 is disposed corresponding to the first rolling holes 552, the second rolling holes 502, and the first opening portion 330. In this relationship, corresponding to the regions I to III, two rolling elements 510 (in the damper device 1, a total of six rolling elements 510) are similarly disposed in each region.

The rolling element 510 has a first outer diameter portion 511 having a predetermined outer diameter, and a second outer diameter portion 512 having the outer diameter smaller than the outer diameter of the first outer diameter portion 511. The first outer diameter portion 511 is supported by the first cam edge 552x of the first rolling hole 552 while penetrating the first opening portion 330 in the intermediate plate 300. The second outer diameter portion 512 is located in both ends of the rolling element 510, and is supported by the second cam edge 502x of the second rolling holes 502. Therefore, the rolling element 510 can roll along the shape of the first cam edge 552x and the shape of the second cam edge 502x.

1-5-4. Roller Pin 520

As illustrated in Figs. 2 to 4 and 6A, the roller pin 520 extends in the axial direction after penetrating the first the first through hole 554 disposed in the oscillating body 550 (as described above, only in a case where the first through hole 554 is disposed in the oscillating body 550). The roller pin 520 is inserted into the first long hole 340 disposed in the intermediate plate 300 (first intermediate plate 301 and second intermediate plate 302) and the second long hole 504 disposed in the mass body 501 (first mass body 501a and second mass body 501b).

As illustrated in Fig. 6A, the roller pin 520 has a small-diameter portion 522 extending in the axial direction and having a predetermined outer diameter (first outer diameter), and a large-diameter portion 521 having an outer diameter (second outer diameter) larger than the outer diameter of the small-diameter portion 522. The small-diameter portion 522 can be inserted into the large-diameter portion 521, and the large-diameter portion has a substantially annular cross-sectional shape so as to rotate relative to the small-diameter portion 522. The outer diameter of the large-diameter portion 521 is set to be approximately 1 mm smaller than the inner diameter of the first long hole 340 extending in the circumferential direction, and is supported by coming into contact with one of the first edge portions 342 extending in the radial direction of the first long hole 340. It is a configuration that can be supported. In a case where the intermediate plate 300 rotates on the first rotation axis O and a centrifugal force is applied to the roller pin 520 (including a case where the intermediate plate 300 and the oscillating body 550 rotate without rotational fluctuation and a case where the oscillating body 550 rotates relative to the intermediate plate 300), the large-diameter portion 521 of the roller pin 520 is supported by coming into contact with the second edge portion 344 on an outer side in the radial direction which extends in the circumferential direction in the first long hole 340 (refer to Fig. 3). According to the above-described configuration, the roller pin 520 is prevented from falling off in the radial direction.

The small-diameter portion 522 of the roller pin 520 can come into contact with the fourth edge portion 504y extending in the radial direction in the second long hole 504. The inner diameter of the second long hole 504 in the circumferential direction is set to be approximately 1 mm larger than the outer diameter of the small-diameter portion 522. Accordingly, the small-diameter portion 522 comes into contact with only one of the fourth edge portions 504y extending in the radial direction. Therefore, the sliding resistance between both of these is reduced, and the roller pins 520 can smoothly roll.

The outer diameter (first outer diameter) of the small-diameter portion 522 is designed to be substantially the same as the inner diameter of the large-diameter portion 521. Accordingly, in order that the small-diameter portion 522 rolls without slippage, it is preferable to reduce the sliding resistance between the small-diameter portion 522 and the large-diameter portion 521 in addition to reducing the sliding resistance between the small-diameter portion 522 and the fourth edge portion 504y. Specifically, it is preferable that the large-diameter portion 521 is configured to serve as a bearing that supports the small-diameter portion 522, particularly, as a slide bearing.

In a case where the intermediate plate 300 rotates on the first rotation axis O and the centrifugal force is applied to the roller pin 520 (including a case where the intermediate plate 300 and the oscillating body 550 rotate without rotational fluctuation and a case where the oscillating body 550 rotates relative to the intermediate plate 300), the small-diameter portion 522 is separated from the third edge portion 504x of the second long hole 504 on both the outer side and the inner side in the radial direction. In this manner, the contact area can be reduced between the second long hole 504 and the small-diameter portion 522, and the sliding resistance can be suppressed between both of these. Therefore, the small-diameter portion 522 can smoothly roll without slippage (the mass body 501 can smoothly move in the radial direction).

Incidentally, as illustrated in Fig. 6A, in principle (except for a case where the intermediate plate 300 and the oscillating body 550 do not rotate on the first rotation axis O), the roller pin 520 is configured to be located within a range of a radial distance r between a first circumferential curve R1 starting from a radially inner end portion 510x of the rolling element 510 as a start point and extending in the circumferential direction and a second circumferential curve R2 starting from a radially outer end portion 510y of the rolling element 510 as a start point and extending in the circumferential direction. Here, it means that the radially inner end portion 510x and the radially outer end portion 510y of the rolling element 510 form the outer diameter in the radial direction (on a line W in Fig. 6A) of the second outer diameter portion 512 of the rolling element 510.

According to this configuration, a contact point between the second outer diameter portion 512 of the rolling element 510 and the second rolling hole 502 of the mass body 501 is used as a point of action, and a contact point between the small-diameter portion 522 and the second long hole 504 (fourth edge portion 504y) is used as a fulcrum. In this manner, the rotational torque acting on the mass body 501 can be reduced. Therefore, the mass body 501 can be prevented from being inclined at a predetermined angle in the circumferential direction.

As described above, the two rolling elements 510 are disposed in the mass body 501. However, in a case where ranges of the radial distances r obtained with reference to each of the rolling elements 510 are different, the roller pin 520 may be located within the range of the radial distance r of any one, or may be located within the range of any radial distance r.

The roller pin 520 adopts the above-described configuration. In this manner, the oscillation of the mass body 501 in the circumferential direction is restricted, and the movement of the mass body 501 can be guided in the radial direction by the rolling of the small-diameter portion 522. The roller pin 520 is disposed corresponding to the first long hole 340, the second long hole 504, and the first through hole 554. In this relationship, corresponding to the regions I to III, one roller pin 520 is disposed in each region (In the damper device 1, three in total). One or more roller pins 520 may be disposed in each area. However, if the number of the roller pins 520 increases, a total sum of the rotational resistance (sliding resistance) of the roller pins 520 increases correspondingly. Therefore, it is preferable that only one roller pin 520 is disposed in each region.

In the damper device 1 according to the embodiment, as described above, a configuration is adopted as follow. The large-diameter portion 521 is disposed corresponding to the first long hole 340 (first edge portion 342 and second edge portion 344). The small-diameter portion 522 is disposed corresponding to the second long hole 504 (third edge portion 504x and fourth edge portion 504y). However, the configuration may be reversed. That is, the small-diameter portion 522 may be disposed corresponding to the first long hole 340, and the large-diameter portion 521 may be disposed corresponding to the second long hole 504. In other words, the damper device 1 according to the embodiment may be configured as follows. In a case where the oscillating body 550 rotates relative to the intermediate plate 300, the roller pin 520 is interposed between the first long hole 340 in the intermediate plate 300 and the second long hole 504 in the mass body 501, and the torque is transmitted between the intermediate plate 300 and the mass body 501 via the roller pin 520.

2. Operation of Damper Device

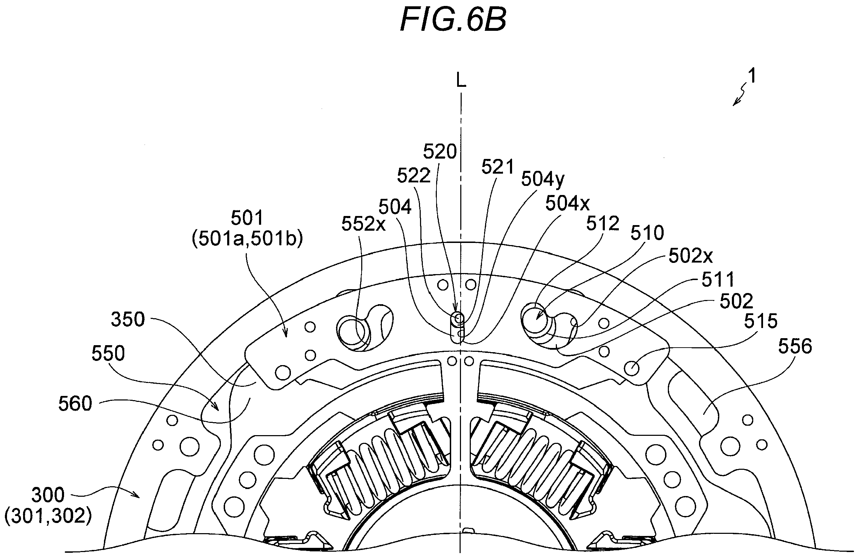

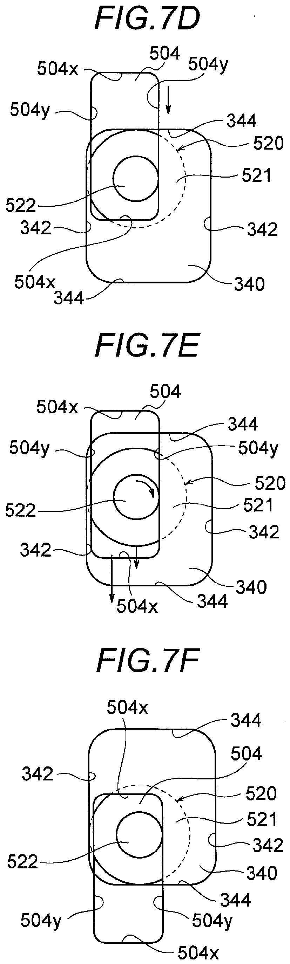

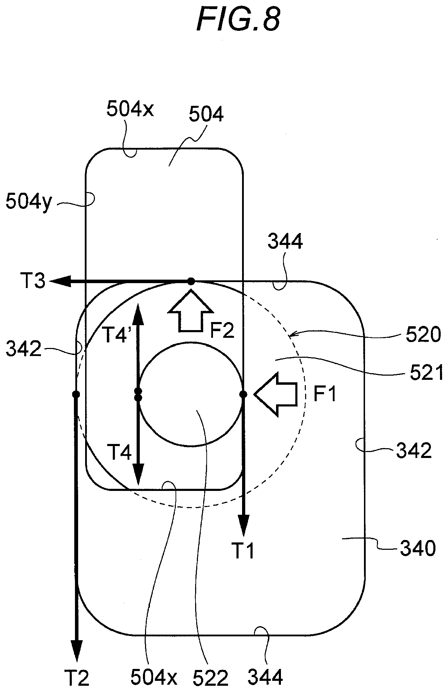

Next, an operation of the damper device 1 having the above-described configuration will be described in detail with reference to Figs. 6A and 6B in contrast and further with reference to Figs. 7A to 7F and 8. Fig. 6B is an enlarged view of the region I in the damper device 1 illustrated in Fig. 2, and is a schematic top view in a case where the oscillating body 550 rotates relative to the rotating body (intermediate plate 300). Figs. 7A to 7F are enlarged views of the first long hole 340, the second long hole 504, and the roller pin 520 in the damper device 1 illustrated in Figs. 6A and 6B, and are schematic views illustrating a series of operations. Fig. 8 is a schematic view conceptually illustrating the torque acting on each contact point of the large-diameter portion 521 and the small-diameter portion 522 of the roller pin 520 with respect to the first long hole 340 and the second long hole 504 in the schematic view illustrated in Fig. 7D.

As described above, the torque output from the drive source such the engine and the motor is transmitted to the disc plate 100, the sheet members 430x on one side, the first elastic body 410, the sheet member 430x on the other side, the intermediate plate 300, the sheet member 430y on one side, the second elastic body 420, the sheet member 430y on the other side, and the hub 200 in this order. Focusing on the region I, the torque is transmitted from the first one end surface $104a_1$ disposed in the disc plate 100 to the sheet member 430x on one side. While the sheet member 430x on one side bends the first elastic body 410, the torque is transmitted to the sheet member 430x on the other side. Furthermore, the sheet member 430x on the other side transmits the torque to the first connecting portion 306a in the intermediate plate 300. While bending the second elastic body 420 via the sheet member 430y on one side, the first connecting portion 306a transmits the torque to the sheet member 430y on the other side. Finally, the torque is transmitted from the sheet member 430y on the other side to the hub 200, and the torque applied to the hub 200 is transmitted. In the regions II and III, the torque is similarly transmitted by operating each of the configuration elements.

Here, as described above, when the torque is transmitted to the intermediate plate 300 and the intermediate plate 300 rotates on the first rotation axis O, the torque is transmitted from the first long hole 340 of the intermediate plate 300 (first intermediate plate 301 and second intermediate plate 302) to the mass body 501 (first mass body 501a and second mass body 501b) via the roller pin 520 (large-diameter portion 521 and small-diameter portion 522). In this manner, the mass body 501 rotates integrally with the intermediate plate 300 on the first rotation axis O, and the centrifugal force acts on the mass body 501. Due to the centrifugal force of the rotation of the intermediate plate 300, the mass body 501 is pushed outward in the radial direction, and moves outward in the radial direction.

When the mass body 501 moves outward in the radial direction, as illustrated in Fig. 6A, the second cam edge 502x of the second rolling hole 502 of the mass body 501 comes into contact with the second outer diameter portion 512 of the rolling element 510. In other words, the rolling element 510 uses the centrifugal force to support the mass body 501 pushed outward in the radial direction. That is, in each region of the regions I to III, the two rolling elements 510 support the pair of mass bodies 501 (first mass body 501a and second mass body 501b).

The second cam edge 502x and the rolling element 510 come into contact with each other. In this manner, the torque is transmitted to the oscillating body 550 from the first cam edge 552x of the first rolling hole 552 via the rolling element 510 from the second cam edge 502x. In this manner, the oscillating body 550 rotates on the first rotation axis O together with the intermediate plate 300 and the mass body 501.

In a case where the intermediate plate 300 and the oscillating body 550 rotate without rotational fluctuation, as illustrated in Fig. 6A, the mass body 501 is located most outward in the radial direction with respect to the first rotation axis O. In this case, as described above, the small-diameter portion 522 of the roller pin 520 and the third edge portion 504x extending in the circumferential direction of the second long hole 504 are separated from each other on both the outer side and the inner side in the radial direction.

Next, when the oscillating body 550 starts to rotate relative to the intermediate plate 300 in a state where the intermediate plate 300 and the oscillating body 550 rotate without rotational fluctuation, the mass body 501 moves in the radial direction in a direction closer to the first rotation axis O (movement of the mass body 501 in the circumferential direction is restricted by the small-diameter portion 522 of the roller pin 520). When a rotational phase difference of the relative rotation is maximized, as illustrated in Fig. 6B, the mass body 501 moves to a most inward position in the radial direction with respect to the first rotation axis O. That is, the mass body 501 is pressed due to the centrifugal force. Accordingly, the second cam edge 502x is pressed against the rolling element 510. Therefore, in a case where the oscillating body 550 oscillates with respect to the intermediate plate 300, a state where the second cam edge 502x and the rolling element 510 are in contact with each other is maintained. The rolling element 510 rolls along the second cam edge 502x by the oscillating movement of the oscillating body 550 with respect to the intermediate plate 300. As the rolling element 510 rolls, the mass body 501 moves inward in the radial direction to be closer to the first rotation axis O.

When the mass body 501 moves inward in the radial direction, the second long hole 504 of the mass body 501 is in contact with the small-diameter portion 522 of the roller pin 520. Therefore, the mass body 501 is guided by the rolling of the small-diameter portion 522, and is smoothly moved inward in the radial direction. In addition, in a state illustrated in Fig. 6A, the small-diameter portion 522 of the roller pin 520 is separated from the third edge portion 504x extending in the circumferential direction of the second long hole 504. Therefore, when the small-diameter portion 522 rolls, the sliding resistance is suppressed, and the mass body 501 is more efficiently moved inward in the radial direction. Therefore, as the damper device 1, it is possible to improve the performance of damping the rotational fluctuation of the intermediate plate 300.

On the other hand, when the rotational phase difference of the relative rotation of the oscillating body 550 with respect to the intermediate plate 300 decreases, the movement of the above-described respective members is reversed, and the mass body 501 moves outward in the radial direction so as to be away from the first rotation axis O. In this way, as the oscillating body 550 oscillates, the mass body 501 reciprocates in the radial direction, thereby damping the rotational fluctuation of the intermediate plate 300.

Here, a series of operations until the rotational phase difference of the relative rotation is maximized from when the oscillating body 550 starts to rotate relative to the intermediate plate 300 in a state where the intermediate plate 300 and the oscillating body 550 rotate without rotational fluctuation will be described in more detail with reference to Figs. 7A to 7F. As in Fig. 6A, Fig. 7A illustrates a case where the intermediate plate 300 and the oscillating body 550 rotate without rotational fluctuation. As in Fig. 6B, Fig. 7F illustrates a case where the rotational phase difference of the relative rotation between the intermediate plate 300 and the oscillating body 550 is maximized. Figs. 7A to 7F schematically illustrate the movement of the mass body 501 and the roller pins 520 in the radial direction.

First, in a state where the intermediate plate 300 and the oscillating body 550 rotate without rotational fluctuation, as illustrated in Fig. 7A, the large-diameter portion 521 of the roller pin 520 has the clearance C1 between both the first edge portions 342 extending in the radial direction of the first long hole 340 (the large-diameter portion 521 and the first edge portions 342 are not in contact with each other). The small-diameter portion 522 of the roller pin 520 has the clearance C2 between both the fourth edge portions 504y extending in the radial direction of the second long hole 504 (the small-diameter portion 522 and the fourth edge portion 504y are not in contact with each other). In this state, the large-diameter portion 521 comes into contact with the second edge portion 344 on the outer diameter side extending in the circumferential direction of the first long hole 340, and is supported by the second edge portion 344. In this manner, even if the centrifugal force acts on the roller pin 520, the outward movement of the roller pin 520 in the radial direction is restricted. In this state, the small-diameter portion 522 is not in contact with any of third edge portions 504x on the inner diameter side and the outer diameter side extending in the circumferential direction of the second long hole 504.

Next, when the intermediate plate 300 and the oscillating body 550 start to rotate relative to each other, as illustrated in Fig. 7B, the mass body 501 moves as much as the clearance C2 in the circumferential direction due to the relative rotation (in Fig. 7B, the rightward-leftward direction in the drawing). In this manner, the fourth edge portion 504y of the second long hole 504 comes into contact with the small-diameter portion 522 of the roller pin 520.

When the rotational phase difference of the relative rotation between the intermediate plate 300 and the oscillating body 550 gradually increases, as illustrated in Fig. 7C, while the mass body 501 presses the roller pin 520 via the small-diameter portion 522, the mass body 501 further moves as much as the clearance C1 in the circumferential direction (in Fig. 7C, the rightward-leftward direction in the drawing). In this manner, the first edge portion 342 of the first long hole 340 comes into contact with the large-diameter portion 521 of the roller pin 520.

When the rotational phase difference of the relative rotation between the intermediate plate 300 and the oscillating body 550 further increases, as illustrated in Fig. 7D, the rotational torque of the oscillating body 550 is transmitted to the first rolling hole 552, the rolling element 510, and the second rolling hole 502 of the mass body 501. Due to a component force acting inward (downward in the drawing in Fig. 7D) in the radial direction, the mass body 501 starts to move inward in the radial direction while rubbing the small-diameter portion 522.

When the rotational phase difference of the relative rotation between the intermediate plate 300 and the oscillating body 550 further increases, as illustrated in Fig. 7E, the mass body 501 moves inward in the radial direction while rubbing the small-diameter portion 522. As a result, while the small-diameter portion 522 rolls (rolls clockwise in Fig. 7E), the roller pin 520 starts to move inward in the radial direction. Since the small-diameter portion 522 rolls, the mass body 501 smoothly moves inward in the radial direction.

As illustrated in Fig. 7F, the roller pin 520 continues to move inward in the radial direction until the rotational phase difference of the relative rotation between the intermediate plate 300 and the oscillating body 550 is maximized. When the large-diameter portion 521 of the roller pin 520 finally comes into contact with the second edge portion 344 on an inner side in the radial direction of the first long hole 340, the inward movement of the roller pin 520 in the radial direction is restricted. Even in this case, the small-diameter portion 522 of the roller pin 520 is not in contact with the third edge portion 504x of the second long hole 504.

As described above, since the small-diameter portion 522 of the roller pin 520 rolls, the mass body 501 efficiently moves inward in the radial direction. A series of operations illustrated in Figs. 7A to 7F has been described in a form in which the mass body 501 and the roller pin 520 move in the leftward direction in the drawing in Figs. 7B and 7C with respect to the intermediate plate 300 when the intermediate plate 300 and the oscillating body 550 start to rotate relative to each other. However, a form may be adopted in which the intermediate plate 300 moves in the circumferential direction (in the rightward direction in the drawing in Fig. 7B) with respect to the mass body 501 (with respect to the oscillating body 550). In this case, after the first edge portion 342 of the first long hole 340 comes into contact with the large-diameter portion 521 of the roller pin 520, the small-diameter portion 522 of the roller pin 520 comes into contact with the fourth edge portion 504y of the second long hole 504.

With regard to the above-described series of operations, in Fig. 7F, a form has been described in which the large-diameter portion 521 of the roller pin 520 finally comes into contact with the second edge portion 344 of the first long hole 340 as a result of the mass body 501 moving inward in the radial direction along with the roller pin 520. However, a form may be adopted in which the large-diameter portion 521 does not come into contact with the second edge portion 344 even when the rotational phase difference of the relative rotation between the intermediate plate 300 and the oscillating body 550 is maximized. In this case, in a case where an operation reverse to the above-described series of operations (that is, an operation switched from a state corresponding to Fig. 7F to a state corresponding to Fig. 7A) is performed, If the large-diameter portion 521 is not in contact with the second edge portion 344 in Fig. 7F, the sliding resistance is reduced between the large-diameter portion 521 and the second edge portion 344. Therefore, the roller pin 520 (mass body 501) can efficiently move outward in the radial direction. Even in the embodiment, when the transmission torque decreases between the mass body 501 and the intermediate plate 300 via the roller pin 520, the roller pin 520 can freely move in the radial direction. As a result, the movement of the roller pin 520 in the radial direction is restricted by the radially inner second edge portion 344 or the radially outer second edge portion 344 (for example, in a case where gravity acts in the downward direction in the drawing in Fig. 7D or 7E, the roller pin 520 moves inward in the radial direction, and the movement is restricted by the second edge portion 344, thereby consequently bringing the roller pin 520 into a state the same as that in Fig. 7F).

A series of operations of the above-described damper device 1 has been described based on an aspect (embodiment) in which the clearance C1 and the clearance C2 are provided. As a result, the mass body 501 slightly moves as much as the clearance C1 and the clearance C2 in the circumferential direction. However, the further movement in the circumferential direction is restricted. When Figs. 6A and 6B are compared with each other, a line L extending in the upward direction in the drawing from the first rotation axis O passes through the center of the mass body 501 in Fig. 6A. In contrast, the line L passes through a position slightly shifted from the center of the mass body 501 in Fig. 6B.

In order to restrict the slight movement of the mass body 501 in the circumferential direction, the inner diameter of the first long hole 340 extending in the circumferential direction and the outer diameter of the large-diameter portion 521 of the roller pin 520 may be substantially the same as each other. The inner diameter of the second long hole 504 extending in the circumferential direction and the outer diameter of the small-diameter portion 522 of the roller pin 520 may be substantially the same as each other. In this case, a backlash of the roller pin 520 can be reduced.

In Figs. 7D to 7F, a form has been described as follows. As described above, as the mass body 501 moves inward in the radial direction while rubbing the small-diameter portion 522, while the small-diameter portion 522 rolls (rolls clockwise in the drawing in Fig. 7E), the roller pin 520 moves inward (and outward) in the radial direction. However, a form may be adopted in which the roller pin 520 does not move inward in the radial direction and the small-diameter portion 522 rolls at the same position.

Next, an example where the small-diameter portion 522 rolls in the roller pin 520 and the roller pin 520 moves in the radial direction due to the rolling of the small-diameter portion 522 will be described in detail with reference to Fig. 8.

First, in a case where the intermediate plate 300 and the oscillating body 550 rotate relative to each other, as illustrated in Fig. 8, a load F1 transmitted from the mass body 501 and a load F2 caused by the centrifugal force act on the roller pin 520. Based on the loads F1 and F2, a torque T1 acts on a contact point between the fourth edge portion 504y of the second long hole 504 and the small-diameter portion 522. A torque T2 acts on a contact point between the first edge portion 342 of the first long hole 340 and the large-diameter portion 521. A torque T3 acts on a contact point with the second edge portion 344 of the first long hole 340. Torques T4 and T4' act on a contact point between the small-diameter portion 522 and the large-diameter portion 521. Out of the torques, the torque T1 acts in a direction in which the small-diameter portion 522 is caused to roll. On the other hand, the torque T4 acts in a direction in which the rolling of the small-diameter portion 522 is hindered. The torques T2 and T3 act in a direction in which the rolling of the large-diameter portion 521 is hindered, and the torque T4' acts in a direction in which the large-diameter portion 521 is caused to roll.

In a case where the mass body 501 moves inward in the radial direction (upward-downward direction in the drawing in Fig. 8), in order for the small-diameter portion 522 to roll (to roll clockwise in the drawing in Fig. 8), a relationship of Equation 1 below needs to be satisfied.

$$T1 > T4 \cdots (1)$$

Here, T1 is expressed by Equation 2 below. $\mu 1$ indicates a friction coefficient at the contact point between the fourth edge portion 504y and the small-diameter portion 522, and r1 indicates a radius of the small-diameter portion 522.

$$T1 = \mu 1 \times F1 \times r1 \cdots (2)$$

Similarly, T4 is expressed by Equation 3 below. $\mu 3$ indicates the friction coefficient at the contact point between the small-diameter portion 522 and the large-diameter portion 521.

$$T4 = \mu 3 \times F1 \times r1 \cdots (3)$$

Based on Equation 2 and Equation 3, in a case of "$\mu 1 > \mu 3$", Equation 1 is satisfied, and the small-diameter portion 522 rolls. Conversely, in a case of "$\mu 1 < \mu 3$", Equation 1 is not satisfied, and the small-diameter portion 522 slips without rolling.

In a case where a load ($\mu 1 \times F1$) for moving the small-diameter portion 522 inward in the radial direction is lower than the load F2 based on the centrifugal force, while the roller pin 520 remains at the position illustrated in Fig. 8, the small-diameter portion 522 rolls on the spot. Conversely, in a case where the load ($\mu 1 \times F1$) for moving the small-diameter portion 522 inward in the radial direction is higher than the load F2 based on the centrifugal force, as illustrated in Figs. 7D and 7F, the roller pin 520 as a whole moves inward in the radial direction so that the small-diameter portion 522 presses down the large-diameter portion 521.

In order for the large-diameter portion 521 to roll separately from the small-diameter portion 522 (to roll clockwise in the drawing in Fig. 8), a relationship of Equation 4 below needs to be satisfied.

$$T4' > T2 + T3 \cdots (4)$$

Here, T4' is expressed by Equation 3 above as in T4. On the other hand, T2 is expressed by Equation 5 below. $\mu 2$ indicates the friction coefficient at the contact point between the first edge portion 342 and the large-diameter portion 521, and r2 indicates the radius of the large-diameter portion 521.

$$T2 = \mu 2 \times F1 \times r2 \cdots (5)$$

Similarly, T3 is expressed by Equation 6 below.

$$T3 = \mu 2 \times F2 \times r2 \cdots (6)$$

Based on Equation 4 to Equation 6, in a case of "$\mu 2 > \mu 3$", "r2>r1" is satisfied, and thus, Equation 4 is not satisfied. Accordingly, the large-diameter portion 521 does not actually roll. If the large-diameter portion 521 does not roll, the large-diameter portion 521 does not slip on the intermediate plate 300, and the first edge portion 342 of the intermediate plate 300 does not actually wear.

3. Damper Device according to Another Embodiment

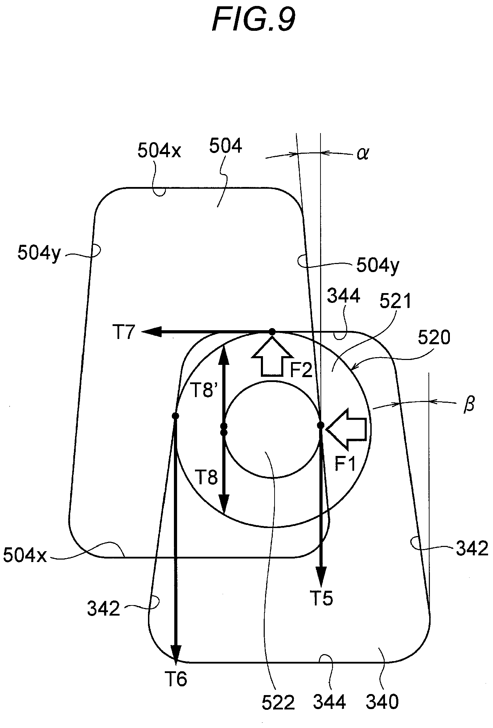

Next, a configuration and an operation of the damper device 1 according to another embodiment will be described with reference to Fig. 9. Fig. 9 is a schematic enlarged view of the first long hole 340, the second long hole 504, and the roller pin 520 in the damper device 1 according to another embodiment. The configuration and the operation of the damper device 1 according to another embodiment are almost common to those of the damper device 1 according to the embodiment described with reference to Figs. 1 to 8. Accordingly, detailed description of the common configuration and operation will be omitted.

In the damper device 1 according to another embodiment, unlike the above-described embodiment, each shape of the first long hole 340 in the intermediate plate 300 and the second long hole 504 in the mass body 501 is a substantially trapezoidal shape. That is, as illustrated in Fig. 9, the first edge portion 342 of the first long hole 340 is not parallel to the radial direction, and extends to be inclined at a predetermined angle (angle $\beta$ in Fig. 9) from the radial direction. Similarly, the fourth edge portion 504y of the second long hole 504 extends to be inclined at a predetermined angle (angle $\alpha$ in Fig. 9) from the radial direction.

The first long hole 340 and the second long hole 504 have the above-described shape. In this manner, the torque for rolling the small-diameter portion 522 of the roller pin 520 can be amplified compared to the case according to the embodiment. Therefore, the small-diameter portion 522 is likely to roll without slippage.

More specifically, a torque T5 acts on a contact point between the fourth edge portion 504y of the second long hole 504 and the small-diameter portion 522, a torque T6 acts on a contact point between the first edge portion 342 of the first long hole 340 and the large-diameter portion 521, a torque T7 acts on a contact point between the second edge portion 344 of the first long hole 340 and the large-diameter portion 521, and torques T8 and T8' act on a contact point between the small-diameter portion 522 and the large-diameter portion 521. Out of the torques, the torque T5 acts in a direction in which the small-diameter portion 522 is caused to roll. On the other hand, the torque T8 acts in a direction in which the rolling of the small-diameter portion 522 is hindered. The torques T6 and T7 act in a direction in which the rolling of the large-diameter portion 521 is hindered, and the torque T8' acts in a direction in which the large-diameter portion 521 is caused to roll.

In this case, in order for the small-diameter portion 522 to roll (roll clockwise in the drawing in Fig. 9), Equation 7 below needs to be satisfied.

$$T5 > T8 \cdots (7)$$

Here, T5 is expressed by Equation 8 below. $\mu1$ and $r1$ are as described above. The fourth edge portion 504y in the second long hole 504 has a tapered shape inclined at a predetermined angle (angle $\alpha$). Accordingly, as T5, both a component force of the load F1 transmitted from the mass body 501 and a component force of the load F2 caused by the centrifugal force act.

$$T5 = \mu1 \times F1\,\cos\alpha \times r1 + \mu1 \times F2\,\sin\alpha \times r1 \cdots (8)$$

Similarly, T8 is expressed by Equation 9 below. $\mu3$ is as described above.

$$T8 = \mu3 \times F1\,\cos\alpha \times r1 \cdots (9)$$

In view of Equation 7 to Equation 9 above, a magnitude of T8 is reduced compared to the above-described embodiment, and a magnitude of the angle $\alpha$ is appropriately set in accordance with a magnitude of F1 and F2. In this manner, a magnitude of T5 can be amplified. According to the elements, it is possible to further suppress the slippage of the small-diameter portion 522, and can adopt a configuration in which the small-diameter portion 522 is more likely to roll.

Specifically, based on Equation 8 and Equation 9, in a case of "$\mu1>\mu3$", Equation 7 is satisfied, and the small-diameter portion 522 rolls. Conversely, in a case of "$\mu1<\mu3$", Equation 1 is not satisfied, and the small-diameter portion 522 slips without rolling. In the damper device 1 according to another embodiment illustrated in Fig. 9, the first long hole 340 and the second long hole 504 have a substantially trapezoidal shape as described above. Accordingly, the angle $\alpha$ is appropriately set. In this manner, it is possible to obtain a more advantageous effect, compared to the damper device 1 according to the embodiment. That is, in a case where the left side T5 in Equation 7 is greater than the left side T1 in Equation 1 (case where the right side T8 in Equation 7 is smaller than the right side T4 in Equation 1), the damper device 1 according to another embodiment can achieve the more advantageous effect. In this regard, for example, in a case of "F1=F2", "T1<T5" is satisfied even if any angle from 0° to 90° is adopted as the angle $\alpha$. For example, in a case of "F2=0.5×F1", "T1<T5" is satisfied even if any angle from 0° to 53° is adopted as the angle $\alpha$.

In order for the large-diameter portion 521 to roll separately from the small-diameter portion 522 (to roll clockwise in the drawing in Fig. 9), a relationship of Equation 10 below needs to be satisfied.

$$T8' > T6 + T7 \cdots (10)$$

Here, T8' is expressed by Equation 9 which is the same as that of T8. On the other hand, T6 is expressed by Equation 11 below. $\mu2$ and $r2$ are as described above. The first edge portion 342 in the first long hole 340 has a tapered shape inclined at a predetermined angle (angle $\beta$). Accordingly, as T6, both the component force of the load F1 transmitted from the mass body 501 and the component force of the load F2 caused by the centrifugal force act thereon.

$$T6 = \mu2 \times F1\,\cos\beta \times r2 + \mu2 \times F2\,\sin\beta \times r2 \cdots (11)$$

As in T3, T7 is expressed by Equation 6 above.

Based on Equation 9 to Equation 11 and Equation 6, in a case of "$\mu2>\mu3$", "r2>r1" is satisfied. Accordingly, Equation 10 is not satisfied. Therefore, the large-diameter portion 521 does not actually roll. If the large-diameter portion 521 does not roll, the large-diameter portion 521 does not slip on the intermediate plate 300, and the first edge portion 342 of the intermediate plate 300 does not actually wear. In the damper device 1 according to another embodiment, the first long hole 340 and the second long hole 504 have a substantially trapezoidal shape as described above. Accordingly, the angle $\beta$ is appropriately set. In this manner, it is possible to obtain the more advantageous effect, compared to the damper device 1 according to the embodiment.

Hitherto, as described above, various embodiments have been described as examples. However, the above-described embodiments are merely examples, and are not intended to limit the scope of this disclosure. The above-described embodiments can be implemented in various other forms, and can be omitted, substituted, or modified in various ways within the scope not departing from the gist of this disclosure. Each configuration, arrangement sequence, shape, size, length, width, thickness, height, and the number of configurations can be changed as appropriate. More specifically, the mass body 501 may be formed to interpose the intermediate plate 300 and the oscillating body 550, and the mass body 501 may be formed to interpose the intermediate plate 300 or the oscillating body 550. Alternatively, in a case of adopting a configuration in which a plurality of members are interposed between different members, the plurality of members may be aligned adjacent to each other in the axial direction, or may be aligned adjacent to each other in the radial direction.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

**Claims**

1. A damper device (1) comprising:

   a rotating body (300, 301, 302) that is configured to rotate on a first rotation axis (O), and that has a first long hole (340) extending in a radial direction of the first rotation axis (O);
   an oscillating body (550) that has at least two first rolling holes (552), that is supported by a plurality of first support portions (310) mounted on a side surface of the rotating body (300, 301, 302), that is rotatable relative to the rotating body (300, 301, 302), and that is configured to oscillate on the first rotation axis (O);
   a mass body (501) that has at least two second rolling holes (502) disposed to face the first rolling holes (552), and a second long hole (504) disposed to face the first long hole (340);
   at least two rolling elements (510) that extend in an axial direction parallel to the first rotation axis (O), being each interposed between at least a first rolling hole (552) and a second rolling hole (502), at least a portion of which supporting a first cam edge (552x) of the first rolling hole (552) and a second cam edge (502x) of the second rolling hole (502), and that is configured to roll along a shape of the first cam edge (552x) and the second cam edge (502x); and
   a roller pin (520) that has a small-diameter portion (522) extending in the axial direction and having a first outer diameter, and a large-diameter portion (521) having a second outer diameter larger than the first outer diameter, configured to rotate relative to the small-diameter portion with the small-diameter portion being inserted into an inside of the large-diameter portion, and having a substantially annular cross-sectional shape, that is inserted into the first long hole (340) and the second long hole (504), one of the small-diameter portion (522) and the large-diameter portion (521) of which is supported by the first long hole (340), and the other of the small-diameter portion (522) and the large-diameter portion (521) of which is configured to guide a movement of the mass body (501) by rolling by itself while coming into contact with the mass body (501).

2. The damper device according to claim 1, wherein
   the large-diameter portion (521) is a bearing into which the small-diameter portion (522) is inserted, and is supported by the first long hole (340), and
   the small-diameter portion (522) is configured to roll by itself to guide the movement of the mass body (501) in the radial direction.

3. The damper device according to claim 1 or 2, wherein

at least one of the first long hole (340) and the second long hole (504) has a substantially trapezoidal shape.

4. The damper device according to any one of claims 1 to 3, wherein
the rotating body (300, 301, 302) further has at least two first opening portions (330) each disposed to face a first rolling hole (552) and a second rolling hole (502), and a pair of the rotating bodies (301, 302) is configured to interpose the oscillating body (550) therebetween,
the oscillating body (550) further has a first through hole (554) disposed to face the first long hole (340), and
the mass bodies (501a, 501b) are configured to interpose the rotating body (300, 301, 302) and the oscillating body (550) therebetween.

5. The damper device according to any one of claims 1 to 4, wherein
in the radial direction, the roller pin (520) is located between a first circumferential curve (R1) starting from a radially inner end portion of the rolling element (510) as a start point and extending in a circumferential direction and a second circumferential curve (R2) starting from a radially outer end portion of the rolling element (510) as a start point and extending in the circumferential direction.

6. The damper device according to any one of claims 2 to 5, wherein
in a case where the rotating body (300, 301, 302) and the oscillating body (550) rotate without rotational fluctuation, and in a case where the oscillating body (550) rotates relative to the rotating body (300, 301, 302), the small-diameter portion (522) is always separated from a circumferential edge portion (504x), extending in a circumferential direction, of the second long hole (504) on an outer side and an inner side in the radial direction.

7. The damper device according to claim 4, wherein
a pair of the mass bodies (501a, 501b) is disposed to interpose a pair of the rotating bodies (301, 302) and the oscillating body (550).

EP 3 708 867 A1

# FIG.1

# FIG.2

## FIG.3

FIG.4

# FIG.5

EP 3 708 867 A1

## FIG.6A

EP 3 708 867 A1

FIG.6B

## FIG.7A

## FIG.7B

## FIG.7C

## FIG.7D

## FIG.7E

## FIG.7F

# FIG.8

# FIG.9

Europäisches
Patentamt

European
Patent Office

Office européen
des brevets

## EUROPEAN SEARCH REPORT

**Application Number**

EP 20 16 2223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2018/199323 A1 (AISIN AW CO [JP]) 1 November 2018 (2018-11-01) * figures 3-6 * ----- | 1-7 | INV. F16F15/123 F16F15/14 |
| A,P | WO 2019/066015 A1 (AISIN AW CO [JP]) 4 April 2019 (2019-04-04) * figure 3 * ----- | 1-7 | |

**TECHNICAL FIELDS SEARCHED (IPC)**

F16F

The present search report has been drawn up for all claims

| Place of search | Date of completion of the search | Examiner |
|---|---|---|
| The Hague | 3 July 2020 | de Miscault, Xavier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 2223

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2020

| Patent document cited in search report | Publication date | Patent family member(s) | Publication date |
|---|---|---|---|
| WO 2018199323 A1 | 01-11-2018 | CN 110494672 A<br>JP WO2018199323 A1<br>WO 2018199323 A1 | 22-11-2019<br>21-11-2019<br>01-11-2018 |
| WO 2019066015 A1 | 04-04-2019 | CN 111133222 A<br>WO 2019066015 A1 | 08-05-2020<br>04-04-2019 |

EPO FORM P0459

For more details about this annex : see Official Journal of the European Patent Office, No. 12/82

**EP 3 708 867 A1**

**Patent documents cited in the description**

- JP 2017053467 A

- US 2387776 A